# EUROPÄISCHE PATENTSCHRIFT

(11) **EP 2 198 180 B1**
(45) Veröffentlichungstag und Bekanntmachung des Hinweises auf die Patenterteilung: **27.08.2014**
(21) Anmeldenummer: 08803656.1
(22) Anmeldetag: 04.09.2008
(51) Int. Cl.: F16D 65/14, B60T 13/74, B60T 7/12

(54) **ELEKTROMECHANISCH BETÄTIGBARE FESTSTELLBREMSE FÜR KRAFTFAHRZEUGE UND VERFAHREN ZUR BETÄTIGUNG EINER SOLCHEN**
ELECTROMECHANICALLY ACTIVATABLE PARKING BRAKE FOR MOTOR VEHICLES, AND METHOD FOR ACTIVATING THE SAME
FREIN DE STATIONNEMENT À COMMANDE ÉLECTROMÉCANIQUE POUR VÉHICULES AUTOMOBILES ET PROCÉDÉ DE COMMANDE DE CELUI-CI

(30) Priorität: 05.09.2007 DE 102007042203; 04.09.2008 DE 102008045693
(43) Veröffentlichungstag der Anmeldung: 23.06.2010
(73) Patentinhaber: Continental Teves AG & Co. OHG, 60488 Frankfurt (DE)
(72) Erfinder: VÖLKEL, Jürgen, 60389 Frankfurt am Main (DE); PUFF, Rüdiger, 64853 Hünstetten-Wallbach (DE); FUNKE, Joachim, 64853 Otzberg (DE)
(86) Internationale Anmeldenummer: PCT/EP2008/061686
(87) Internationale Veröffentlichungsnummer: WO 2009/030726

(56) Entgegenhaltungen:
- EP-A- 1 787 882
- DE-A1- 19 738 877
- DE-A1-102005 056 221
- DE-A1-102007 043 620

## Beschreibung

Die vorliegende Erfindung betrifft eine elektromechanisch betätigbare Feststellbremse für Kraftfahrzeuge, die als Trommelbremse vom Typ "Duo-Servo" ausgeführt ist, mit einer von einem elektromechanischen Aktuator betätigbaren, als Spreizelement ausgebildeten Bremsbetätigungsvorrichtung, welche auf zwei Bremsbacken wirkt, wobei das Spreizelement über einen Federspeicher abgestützt ist, der als Tellerfederpaket ausgebildet ist, und bei Betätigung der Feststellbremse zum Aufbringen einer Zuspannkraft über eine vorbestimmte Weglänge auseinander bewegt wird. Die Erfindung betrifft außerdem ein Verfahren zur Betätigung einer derartigen Feststellbremse.

Unter einer Trommelbremse wird eine Bremse verstanden, bei der Bremsbeläge mit einer zylindrischen Fläche zusammen wirken. Sie werden beim Betätigen der Bremse von außen oder innen gegen eine umlaufende Trommel gedrückt. Charakteristisch für eine Trommelbremse vom Typ "Duo-Servo" ist eine frei bewegliche bzw. schwimmend gelagerte Abstützvorrichtung, die einer Bremsbetätigungsvorrichtung in Form eines Spreizschlosses (auch Spreizmodul oder Spreizelement genannt) gegenüber liegt und zwischen den Bremsbacken angeordnet ist. Eine derartige Duo-Servo-Bremse ist häufig im Topf der hinteren Scheibenbremse untergebracht und dient als Feststellbremse, insbesondere bei Kraftfahrzeugen mit größerer Masse und hohen Komfortanforderungen.

Die Druckschrift WO 2004/059189 A1 beschäftigt sich mit einer derartigen elektromechanisch betätigbaren Feststellbremse für Kraftfahrzeuge, die als eine Trommelbremse vom Typ "Duo-Servo" ausgeführt ist. Das Spreizelement (Spreizschloss) wird durch eine Gewindemutter-Spindel-Anordnung gebildet, deren Gewindemutter von einem elektromechanischen Aktuator über ein Schraubrad angetrieben wird. Aufgrund der Betätigung der Gewindemutter durch den Aktuator wird die Spindel in eine Translationsbewegung versetzt und bringt die beiden Bremsbacken mit der gewünschten Zuspannkraft mit der Bremstrommel in Eingriff. Hierdurch wird während eines Feststellbremsvorgangs die Zuspannkraft auch bei verschlissenen Bremsbelägen zuverlässig gewährleistet.

Aus der Druckschrift DE 10 2004 049 434 A1 ist ebenfalls eine elektromechanisch betätigbare Feststellbremse, welche als Trommelbremse vom Typ "Duo-Servo" ausgeführt ist, bekannt. Das Spreizelement dieser Trommelbremse wird im Wesentlichen durch eine Gewindemutter-Spindel-Anordnung und zwei Druckstücke gebildet, wobei das eine Druckstück mit der Spindel und das andere Druckstück mit der Gewindemutter zusammenwirkt. Im Kraftfluss zwischen der Gewindemutter-Spindel-Anordnung und dem mit der Gewindemutter zusammenwirkenden Druckstück ist ein Federelement (Federspeicher) vorgesehen. Sofern das Kraftfahrzeug an einem Hang abgestellt wird, erfolgt nach der Einstellung der gewünschten Zuspannkraft eine geringfügige Bewegung des Kraftfahrzeugs in Richtung der Hangabtriebskraft. Dabei dreht sich die Bremstrommel um einen bestimmten Winkelbetrag, bis der für eine Trommelbremse vom Typ "Duo-Servo" charakteristische Selbstverstärkungseffekt einsetzt. Als Folge wird zunächst die gewünschte Zuspannkraft reduziert, welche durch das Federelement kompensiert wird.

Bei der vorgenannten, elektromechanisch betriebenen DuoServo-Bremse wird bei jedem Parkbremsvorgang die Spreizkraft in Höhe der Auslegungskraft nicht unterschritten. Wird das Kraftfahrzeug in der Ebene oder einem Hang mit einer geringeren Neigung abgestellt, so ändert sich an dieser Auslegung nichts, obwohl in den meisten Fällen eine Hangneigung kleiner als ausgelegt vorliegen dürfte. Durch diese Auslegung wird das Spreizelement bei Betätigung der Feststellbremse über eine solche Weglänge auseinander bewegt, die ein Mindesthaltemoment und den für den Duo-Servo-Effekt vorzuhaltenden Spreizweg bezogen auf die ausgelegte Hangkraft berücksichtigt. Durch eine solche Auslegung besteht das Problem, dass bei einem kritischen Fall, bei dem das Kraftfahrzeug in der Ebene "heiß", d.h. mit heißer Scheibenbremse oder anderen aufgeheizten Elementen der Feststellbremse, abgestellt wird, die Feststellbremse nach dem Abkühlen nicht mehr gelöst werden kann. Dies ist dadurch begründet, dass sich die Bremstrommel, an der die Backen anliegen, nach dem Abkühlen des Kraftfahrzeugs zusammenzieht, so dass sich die Zuspannkraft vergrößert und das System im Kraft-Weg-Diagramm zu größeren Kräften verschoben wird. Durch diesen Effekt kann im ungünstigsten Fall die Zuspannkraft so erhöht weit werden, dass ein Öffnen der Bremse nicht mehr möglich ist oder Bremsenteile zerstört werden.

Aus der DE 19 738 877 A1 ist eine Feststellbremsanlage mit einem Betätigungszug und mit einem Zentralaktuator bekannt welcher die Betätigung mit Hilse von einem elektronischen Steuergerät sowie mit Hilfe von einem Kraftsensor und einem Hubsensor vollzieht, die dem Betätigungszug zugeordnet sind.

Die Aufgabe der vorliegenden Erfindung besteht demnach darin, eine elektromechanisch betätigbare Feststellbremse vom Typ "Duo-Servo" zu schaffen, die ein Festgehen der Feststellbremse beim Heißabstellen in der Ebene vermeidet und gleichzeitig ein Haltemoment bereitstellt, das jederzeit ein sicheres Feststellen des Kraftfahrzeugs auch an einem Hang ermöglicht. Die Aufgabe besteht ferner darin, ein entsprechendes Verfahren zum Betätigen einer elektromechanisch betätigbaren Feststellbremse anzugeben.

Die obige Aufgabe wird durch eine Feststellbremse mit den kennzeichnenden Merkmalen vom Anspruch 1 gelöst.

Der Vorteil der erfindungsgemäßen Feststellbremse besteht darin, dass durch die Anpassung der Feststellbremse an den Kraftfahrzeugzustandsparameter Hangneigung für den kritischen Fall des Heißabstellens in der Ebene ausreichend Weg bzw. ein ausreichend großes Kraftintervall zur Verfügung gestellt wird, um ein Festgehen der Bremse zu vermeiden.

Erfindungsgemäß ist die von dem Spreizelement zurückgelegte Weglänge abhängig von der konkreten Neigung des Hangs, an dem das Fahrzeug abgestellt wird, einstellbar. Insbesondere in diesem Fall wird für das Abstellen des Kraftfahrzeugs in der Ebene bei der Betätigung der Feststellbremse kein zusätzlicher Weg des Spreizelements eingestellt, um eine nicht vorhandene Hangneigung zu kompensieren. Hierdurch wird das Intervall des Kraft-Weg-Diagramms der Feststellbremse, das zum gefahrlosen Heißabstellen des Kraftfahrzeugs zur Verfügung steht und in dem die Kräfte noch nicht zu groß werden, vergrößert. Umgekehrt wird für das Abstellen des Kraftfahrzeugs der von dem Neigungssensor des Kraftfahrzeugs zur Verfügung gestellte konkrete und aktuelle Hangneigungswert bei der von dem Spreizelement zurückgelegten Weglänge berücksichtigt, so dass gewährleistet ist, dass immer das erforderliche Hanghaltemoment aufgebracht wird.

Bevorzugt ist daher bei einem Hang, dessen Neigung unterhalb eines Schwellwerts liegt, eine erste, vom Spreizelement zurückgelegte Weglänge einstellbar, und bei einem Hang, dessen Neigung gleich dem Schwellwert ist oder darüber liegt, eine zweite Weglänge einstellbar, welche um einen zusätzlichen Weglängenanteil größer ist als die erste Weglänge, wobei in dem zusätzlichen Weglängenanteil die Weglänge berücksichtigt wird, welche von der Feststellbremse beim Abstellen am Hang durch die zusätzliche notwendige Zuspannkraft verbraucht wird. Es können auch mehrere derartiger Schwellwerte (stufige Einstellung) oder eine stufenlose Einstellung vorgesehen werden.

In einem bevorzugten Ausführungsbeispiel ist vorgesehen, dass die eingestellte Weglänge des Spreizelements zusätzlich abhängig von der Bremsen- und/oder Motortemperatur des Kraftfahrzeugs ein gestellt wird. Hierdurch kann das System in Grenzfällen sicherer gemacht werden, da bei diesem Ausführungsbeispiel die kritische Situation des Heißabstellens in der Ebene direkt erfasst wird. Bevorzugt sind hierfür Erfassungs-Mittel vorgesehen, welche das Temperaturprofil der Bremse nach dem Abstellen des Kraftfahrzeugs erfassen, wobei das erfasste Temperaturprofil bei der Einstellung der von dem Spreizelement zurückgelegten Weglänge berücksichtigbar ist. Ausgehend von der Information aus dem Temperaturmodell der Bremse kann beispielsweise das durch den Federspeicher ermöglichte "schwache" Nachspannen in der Ebene dann eingesetzt werden, wenn die Bremse über einen entsprechend festzulegenden Schwellwert heiß gefahren ist und gleichzeitig das Wegrollen des Fahrzeugs nach dem Abstellen über eine fest vorgegebene Abkühlzeit, beispielsweise einige Minuten, hinweg überwacht wird.

Denkbar wäre in diesem Zusammenhang auch, die Hangneigung indirekt zu ermitteln. Zusätzlich kann des weiteren fahrerinduziert der Umfang der Spreizkraft beispielsweise durch die Betätigungsdauer der Bremsbetätigungsvorrichtung vorgegeben werden.

Die obige Aufgabe wird ferner durch ein Verfahren mit den Kennzeichenden Merkmalen von Anspruch 5 gelöst.

Neben den oben genannten Vorteilen ist bei Verwendung des erfindungsgemäßen Verfahrens außerdem eine geringere Belastung aller kraft- und momentführenden Bauteile zu erwarten, da in den meisten Fälle eine geringere Hangneigung vorliegt und somit die aufgebrachte Bremskraft insgesamt geringer ist. Dies gilt insbesondere für das Federelement. Hierdurch ergibt sich eine höhere Lebensdauer des Federelements, des Aktuators und der Elektronik-Hardware.

Vorzugsweise wird in der stufig geschalteten Ausführung bei einem Hang, dessen Neigung unterhalb eines Schwellwerts liegt, eine erste, vom Spreizelement zurückgelegte Weglänge eingestellt und bei einem Hang, dessen Neigung unter Berücksichtigung einer installierten Hysterese des Schwellwerts über dem Schwellwert liegt, eine zweite Weglänge eingestellt, welche um einen Weglängenanteil größer ist als die erste Weglänge, wobei in dem Weglängenanteil die Weglänge berücksichtigt wird, welche von der Feststellbremse beim Abstellen am Hang verbraucht wird.

Zusätzlich kann die eingestellte Weglänge des Spreizelements abhängig von der Bremsen- und/oder Motortemperatur des Kraftfahrzeugs eingestellt werden. In einem bevorzugten Ausführungsbeispiel kann das Temperaturprofil der Bremse nach dem Abstellen des Kraftfahrzeugs erfasst werden, wobei das erfasste Temperaturprofil bei der Einstellung der von dem Spreizelement zurückgelegten Weglänge berücksichtigt wird.

Weitere Einzelheiten ergeben sich auch aus der nachfolgenden Beschreibung eines Ausführungsbeispiels einer erfindungsgemäßen Feststellbremse anhand von Figuren.

Es zeigen schematisch:
- Fig. 1: eine erfindungsgemäße Feststellbremse in einer Ansicht von der Seite,
- Fig. 2 und 3: Kraft-Weg-Diagramme der erfindungsgemäßen Feststellbremse beim Zuspannen und Lösen.

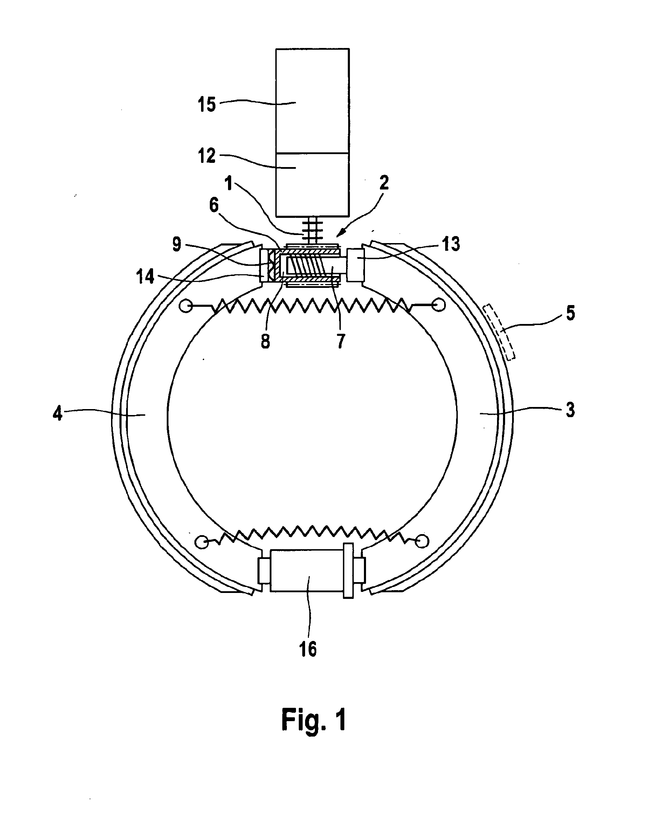

Die in Figur 1 dargestellte elektromechanisch betätigbare Feststellbremse besteht im wesentlichen aus einer an sich bekannten Trommelbremse vom Typ "Duo-Servo", sowie einem elektromechanischen Aktuator 15. Die Trommelbremse vom Typ "Duo-Servo" weist eine lediglich teilweise dargestellte Bremstrommel 5, ein mit Reibflächen versehenes Paar von Bremsbacken 3, 4 und ein Spreizelement (Spreizschloss) 2 auf, das die Reibflächen der Bremsbacken 3, 4 mit der Innenseite der Bremstrommel 5 in Eingriff bringen kann. Charakteristisch für die Trommelbremse vom Typ "Duo-Servo" ist eine frei bewegliche bzw. schwimmend gelagerte Abstützvorrichtung 16, die dem Spreizelement 2 gegenüber liegt und zwischen den Bremsbacken 3, 4 angeordnet ist. Außerdem ist die Abstützvorrichtung 16 mit einer Nachstellvorrichtung kombiniert.

Das Spreizelement 2 wird im wesentlichen durch eine Gewindemutter-Spindel-Anordnung 8 und zwei Druckstücke 13, 14 gebildet, wobei das eine Druckstück 13 mit der Spindel 7 und das andere Druckstück 14 mit der Gewindemutter 6 zusammenwirkt. Wie in Figur 1 verdeutlicht ist, wird die Gewindemutter-Spindel-Anordnung 8 von einem Schraubrad 1 betätigt, das vom elektromechanischen Aktuator 15 über ein nicht näher beschriebenes Untersetzungsgetriebe 12 angetrieben wird. Zu diesem Zweck weist die Gewindemutter 6 auf der äußeren Oberfläche eine Verzahnung auf, die parallel zur Achse der Gewindemutter 6 verläuft. Mit dieser Geradverzahnung der Gewindemutter 6 bildet das Schraubrad 1 ein Schraubradgetriebe. Bei einer Betätigung des Schraubrads 1 durch den elektromechanischen Aktuator 15 wird die Gewindemutter 6 in eine Rotationsbewegung versetzt. Aufgrund dieser Rotationsbewegung der Gewindemutter 6 vollzieht die Spindel 7 der Gewindemutter-Spindel-Anordnung 8 eine Translationsbewegung über eine von einer nicht dargestellten Steuereinrichtung gemäß dem erfindungsgemäßen Verfahren vorgegebenen Weglänge und bringt die beiden Bremsbacken 3, 4 über ein Federelement 9, das beispielsweise als Tellerfederpaket ausgebildet ist, und die Druckstücke 13, 14 mit der gewünschten Zuspannkraft mit der Bremstrommel 5 in Eingriff.

Um einen Feststellbremsvorgang durchführen zu können, ist entweder das Untersetzungsgetriebe 12 oder die Gewindemutter-Spindel-Anordnung 8 selbsthemmend ausgebildet. Durch diese Maßnahme verbleiben die Bremsbacken 3, 4 im stromlosen Zustand des elektromechanischen Aktuators 15 mit der Bremstrommel 5 in Eingriff.

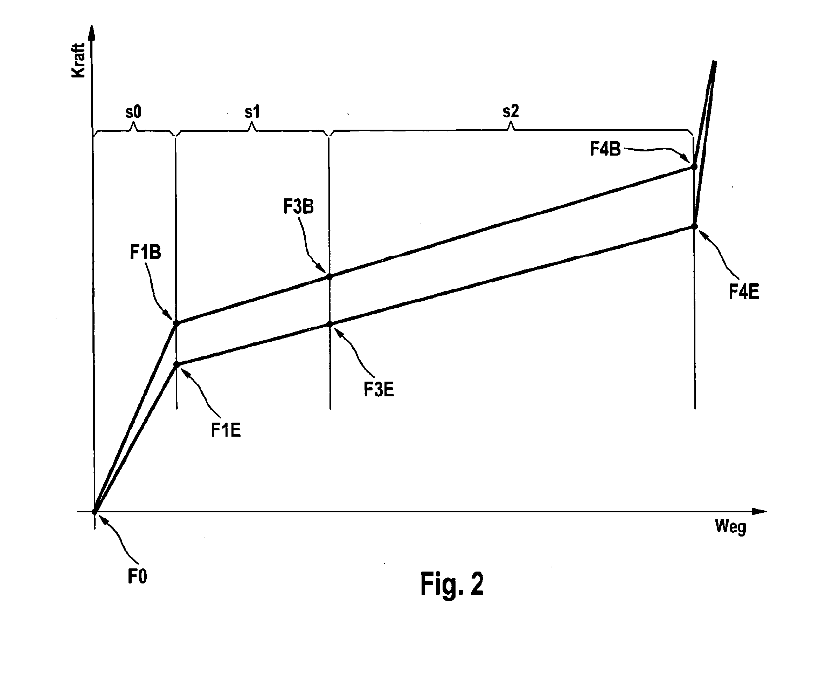

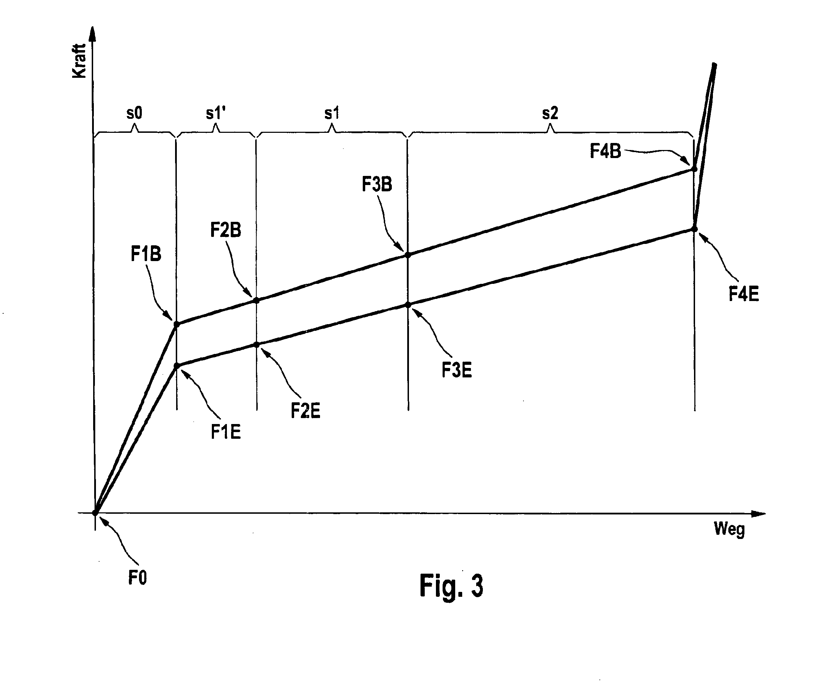

Das erfindungsgemäße Verfahren zur Betätigung der Feststellbremse wird nachfolgend anhand der in den Figuren 2 und 3 dargestellten Diagramme beschrieben. Die Diagramme zeigen den Zusammenhang zwischen der Weglänge, die das Spreizelement 2 auseinander bewegt wird, und der sich entsprechend ergebenden Zuspannkraft der Bremsbacken 3, 4. Hierbei beschreibt der obere Zweig der Kraft-Weg-Kurve die Verhältnisse bei Spannen der Feststellbremse und der untere Zweig den Zusammenhang beim Lösen.

Beim Abstellen des Kraftfahrzeugs an einem Hang mit einer Neigung, die bei stufiger Ausführung geringer als eine Klassengrenze ist, wird bei Betätigung der Feststellbremse zunächst das Spreizelement 2 um einen Weg s0 auseinander bewegt. Hierbei wird der Wert der konkreten, aktuellen Hangneigung einem nicht dargestellten Steuergerät, das mit dem Aktuator 15 verbunden ist, der Feststellbremse durch einen geeigneten Sensor zur Verfügung gestellt. Beim Lösen der Feststellbremse entspricht die durch die Weglänge s0 aufgebrachte Kraft der Mindestspreizkraft F1E. Der der Weglänge s0 auf dem oberen Kurvenzweig entsprechende Punkt F1B wird von dem Steuergerät der Feststellbremse mit einer ausreichenden Genauigkeit erkannt.

Ferner wird das Spreizelement 2 durch den Aktuator 15 um einen weiteren Weg s1 bewegt, der als Spreizweg bezeichnet wird und dem Weg entspricht, der von dem Duo-Servo-Effekt verbraucht wird. s1 ist abhängig von der Hangneigung. Demzufolge hat das System mindestens einen Weg s2 zur Verfügung, der beim Heißabstellen des Kraftfahrzeugs und der entsprechenden Abkühlung der Bremse unkritisch ist und immer noch ein Lösen der Feststellbremse im später eingenommenen kalten Zustand ermöglicht. s2 ist abhängig von s1 und den den Gesamtweg bestimmenden Toleranzketten. Erst deutlich oberhalb des Punkts F4B auf der Kraft-Weg-Kurve kann die Feststellbremse nicht mehr gelöst werden bzw. wird eine Zerstörung eines oder mehrerer Teile der Feststellbremse hervorgerufen, wobei im vorliegenden Fall in der Regel die Weglänge s2 genügend Weg zum Ausgleich des Zusammenziehens beim Abkühlen der Feststellbremse bereitstellt.

In Figur 3 wird die Situation dargestellt, die sich im Kraft-Weg-Diagramm ergibt, wenn das Kraftfahrzeug bei stufiger Auslegung an einem Hang mit einer Neigung oberhalb des Schwellwerts abgestellt wird. Bei der Betätigung der Feststellbremse wird zusätzlich der Weg s1' bereitgestellt, der die für ein sicheres Halten am Hang mit der entsprechenden Neigung notwendige zusätzliche Spreizkraft F2E bereitstellt. Nach Eintreten des Duo-Servo-Effekts am Hang, verbleibt ein Weganteil s2 + s1, der dem Federspeicher zum evtl. Heißabstellen bereitgestellt wird. Der Punkt F4B wird beim Heißabstellen nicht erreicht oder lediglich geringfügig überfahren.

Die vorliegende Erfindung bewirkt bei einer Verknüpfung der Auslegung des Federelements mit einem Kraftfahrzeugszustandsparameter, insbesondere bei einer die Hangneigung berücksichtigenden Software einerseits, dass ausreichend Heißabstellweg im kritischen Fall zur Verfügung gestellt wird, und andererseits, dass ein Mindesthanghaltemoment zum sicheren Feststellen des Kraftfahrzeugs realisiert wird. Gleichzeitig werden mit dem erfindungsgemäßen Verfahren bzw. in der erfindungsgemäßen Feststellbremse alle kraft- und momentführenden Bauteile entlastet und ihre Lebensdauer verlängert sich.

### Bezugszeichenliste:

- 1: Schraubrad
- 2: Spreizelement
- 3, 4: Bremsbacken
- 5: Bremstrommel
- 6: Gewindemutter
- 7: Spindel
- 8: Gewindemutter-Spindel-Anordnung
- 12: Untersetzungsgetriebe
- 13, 14: Druckstücke
- 15: elektromechanischer Aktuator
- 16: Abstützvorrichtung

- s0, s1, s1', s2: Wegelängen im Kraft-Weg-Diagramm bei Betätigung der Feststellbremse
- F1E: Mindestspreizkraft
- F2E: für ein sicheres Halten am Hang notwendige Spreizkraft
- F1B, F4B, F2B, F3E, F3B: weitere Punkte auf der Kraft-Weg-Kurve, die von der Software angefahren werden können

## Patentansprüche

1. Elektromechanisch betätigte Feststellbremse für Kraftfahrzeuge, die als Trommelbremse vom Typ 'Duo-Servo' ausgeführt ist, mit einer von einem elektromechanischen Aktuator (15) betätigten, als Spreizelement (2) ausgebildeten Bremsbetätigungsvorrichtung, die auf zwei Bremsbacken (3,4) wirkt, wobei das Spreizelement über einen, Tellerfederpaket ausgebildeten Federspeicher (9) abgestützt ist und bei Betätigung der Feststellbremse zum Aufbringen einer Zuspannkraft über eine vorbestimmte Weglänge auseinander bewegt wird,
**dadurch kennzeichnet, dass** ein Steuergerät vorgesehen ist, welches
die von dem Spreizelement (2) bei Betätigung der Feststellbremse zum Aufbringen der Zuspannkraft zurückgelegte Weglänge abhängig von mindestens einem Kraftfahrzeugzustandsparameter einstellt, wobei beim Abstellen des Fahrzeugs an einem Hang abhängig von der konkreten Neigung des Hangs eine von dem Spreizelement (2) zusätzlich zu einer Weglänge (50) zurückzulegende Weglänge (s1',s1) eingestellt wird.

2. Feststellbremse nach Anspruch 1, **dadurch gekennzeichnet, dass** bei einem Hang, dessen Neigung unterhalb eines Schwellwerts liegt, eine erste, vom Spreizelement (2) zurückgelegte Weglänge (s0+s1) eingestellt wird, und bei einem Hang, dessen Neigung gleich dem Schwellwert ist oder oberhalb des Schwellwerts liegt, eine zweite Weglänge (s0+s1'+s1) eingestellt wird, welche um einen zusätzlichen Weglängenanteil (s1') größer ist als die erste Weglänge (s0+s1), wobei in dem zusätzlichen weglängenteil (s1') die Weglänge berücksichtigt ist, welche von der Feststellbremse beim Abstellen am Hang durch die zusätzlich notwendige Zuspannkraft verbraucht wird.

3. Feststellbremse nach einem der vorhergehenden Ansprüche, **dadurch gekennzeichnet, dass** die eingestellte Weglänge des Spreizelements (2) abhängig von der Bremsen- und/oder Motortemperatur des Kraftfahrzeugs eingestellt wird.

4. Feststellbremse nach Anspruch 3, **dadurch gekennzeichnet, dass** Erfassungs-Mittel vorgesehen sind, welche das Temperaturprofil der Bremse nach dem Abstellen des Kraftfahrzeugs erfassen, und dass das erfasste Temperaturprofil bei der Einstellung der von dem Spreizelement (2) zurückgelegten Weglänge berücksichtigt wird.

5. Verfahren zur Betätigung einer Feststellbremse nach einem der vorhergehenden Ansprüche, **dadurch gekennzeichnet, dass** die Weglänge, die das Spreizelement (2) bei Betätigung der Feststellbremse in der Auseinanderbewegung zurücklegt, abhängig von mindestens einem Kraftfahrzeugzustandsparameter eingestellt wird, indem das Steuergerät die von dem Spreizelement (2) zusätlich zurückzulegende Weglänge abhängig von der konkreten Neigung des Hangs, an dem das Fahrzeug abgestellt ist, einstellt.

6. Verfahren nach Anspruch 5, **dadurch gekennzeichnet, dass** bei einem Hang, dessen Neigung unterhalb eines Schwellwerts liegt, eine erste, vom Spreizelement zurückgelegte Weglänge (s0+s1) eingestellt wird, und bei einem Hang, dessen Neigung gleich dem Schwellwert ist oder oberhalb des Schwellwerts liegt, eine zweite Weglänge (s0+s1+s1') eingestellt wird, welche um einen Weglängenanteil (s1') größer ist als die erste Weglänge (s0+s1), wobei der Weglängenanteil (s1') die Weglänge berücksichtigt, welche von der Feststellbremse beim Abstellen am Hang verbraucht wird.

7. Verfahren nach einem der Ansprüche 5 bis 6, **dadurch gekennzeichnet, dass** die eingestellte Weglänge des Spreizelements (2) abhängig von der Bremsen- und/oder Motortemperatur des Kraftfahrzeugs eingestellt wird.

8. Verfahren nach Anspruch 7, **dadurch gekennzeichnet, dass** das Temperaturprofil der Bremse nach dem Abstellen des Kraftfahrzeugs erfasst wird, und dass das erfasste Temperaturprofil bei der Einstellung der von dem Spreizelement (2) zurückzulegenden Weglänge berücksichtigt wird.

## Claims

1. Electromechanically actuated parking brake for motor vehicles, which is embodied as a drum brake of the "duo-servo" type, having a brake actuating device which is actuated by an electromechanical actuator (15), is designed as an expander element (2) and acts on two brake shoes (3, 4), the expander element being supported via a spring energy storage device (9), which is designed as a diaphragm spring assembly, and being spread by a predetermined length of travel, when the parking brake is actuated, to apply an application force, **characterized in that** a control unit is provided which sets the length of travel travelled by the expander element (2) to apply the application force when the parking brake is actuated as a function of at least one motor vehicle state parameter, wherein, when the vehicle is parked on a slope, as a function of the actual inclination of the slope a length of travel (s1', s1) to be travelled by the expander element (2) in addition to a length of travel (sO) is set.

2. Parking brake according to Claim 1, **characterized in that** a first length of travel (s0+s1) travelled by the expander element (2) is set in the case of a slope, the inclination of which is below a threshold value, and a second length of travel (s0+s1'+s1), which is greater than the first length of travel (s0+s1) by an additional length of travel component (s1'), is set in the case of a slope, the inclination of which is equal to the threshold value or above the threshold value, the additional length of travel component (s1') taking into account the length of travel used up by the parking brake when parking on the slope owing to the additional application force required.

3. Parking brake according to one of the preceding claims, **characterized in that** the set length of travel of the expander element (2) is set as a function of the brake and/or engine temperature of the motor vehicle.

4. Parking brake according to Claim 3, **characterized in that** detection means are provided which detect the temperature profile of the brake after the motor vehicle has been parked, and **in that** the temperature profile detected is taken into account when the length of travel travelled by the expander element (2) is being set.

5. Method for actuating a parking brake according to one of the preceding claims, **characterized in that** the length of travel which the expander element (2) travels in the expanding motion when the parking brake is actuated is set as a function of at least one motor vehicle state parameter by the control unit setting the length of travel to be additionally travelled by the expander element (2) as a function of the actual inclination of the slope on which the vehicle is parked.

6. Method according to Claim 5, **characterized in that** a first length of travel (s0+s1) travelled by the expander element is set in the case of a slope, the inclination of which is below a threshold value, and a second length of travel (s0+s1+s1'), which is greater than the first length of travel (s0+s1) by a length of travel component (s1'), is set in the case of a slope, the inclination of which is equal to the threshold value or above the threshold value, the length of travel component (s1') taking into account the length of travel used up by the parking brake when parking on the slope.

7. Method according to one Claims 5 to 6, **characterized in that** the set length of travel of the expander element (2) is set as a function of the brake and/or engine temperature of the motor vehicle.

8. Method according to Claim 7, **characterized in that** the temperature profile of the brake is detected after the motor vehicle has been parked, and **in that** the temperature profile detected is taken into account when the length of travel to be travelled by the expander element (2) is being set.

## Revendications

1. Frein de stationnement pour véhicule automobile actionné par voie électromécanique,
configuré comme frein à tambour de type "Duo-Servo" et présentant un dispositif d'actionnement de frein actionné par un actionneur électromécanique (15) et configuré comme élément écartable (2) qui agit sur deux mâchoires de frein (3, 4),
l'élément écartable étant soutenu par un accumulateur élastique (9) configuré comme paquet de ressorts en plateau et étant dilaté sur une distance prédéterminée lors de l'actionnement du frein de stationnement de manière à appliquer une force de serrage,
**caractérisé en ce que**
il présente un appareil de commande qui ajuste en fonction d'au moins un paramètre d'état du véhicule automobile la distance parcourue par l'élément écartable (2) lorsque le frein de stationnement est actionné pour appliquer la force de serrage,
**en ce que** lorsque le véhicule est arrêté sur une pente, une distance (s1', s1) supplémentaire de l'élément écartable (2) est réglée en plus de la distance (s0).

2. Frein de stationnement selon la revendication 1, **caractérisé en ce qu'**au cas où la pente a une inclinaison inférieure à une valeur de seuil, une première distance (s0 + s1) parcourue par l'élément écartable (2) est établie et **en ce qu'**au cas où l'inclinaison de la pente est égale ou supérieure à la valeur de seuil, une deuxième distance (s0 + s1' + s1) supérieure à la première distance (s0 + s1) d'une partie (s1') supplémentaire de distance est établie, la partie supplémentaire (s1') de distance tenant compte de la distance à parcourir pour obtenir la force de serrage supplémentaire appliquée par le frein de stationnement lors d'un arrêt sur la pente.

3. Frein de stationnement selon l'une des revendications précédentes, **caractérisé en ce que** la distance réglée pour l'élément écartable (2) est réglée en fonction de la température des freins et/ou du moteur du véhicule automobile.

4. Frein de stationnement selon la revendication 3, **caractérisé en ce qu'**il présente des moyens de saisie qui saisissent le profil de température du frein après le stationnement du véhicule automobile et **en ce que** le profil de température saisi est pris en compte lors du réglage de la distance parcourue par l'élément écartable (2).

5. Procédé d'actionnement d'un frein de stationnement selon l'une des revendications précédentes, **caractérisé en ce que** la distance parcourue dans le sens de l'écartement par l'élément écartable (2) lors de l'actionnement du frein de stationnement est ajustée en fonction d'au moins un paramètre d'état du véhicule automobile par le fait que l'appareil de commande règle la distance supplémentaire parcourue par l'élément écartable (2) en fonction de l'inclinaison effective de la pente sur laquelle le véhicule est arrêté.

6. Procédé selon la revendication 5, **caractérisé en ce qu'**au cas où l'inclinaison de la pente est inférieure à une valeur de seuil, une première distance (s0 + s1) parcourue par l'élément écartable est réglée, et au cas où l'inclinaison de la pente est égale ou supérieure à la valeur de seuil, une deuxième distance (s0 + s1 + s1') supérieure à la première distance (s0 + s1) d'une partie (s1') supplémentaire de distance est établie, la partie supplémentaire (s1') de distance tenant compte de la distance à parcourir pour obtenir la force de serrage supplémentaire appliquée par le frein de stationnement lors d'un arrêt sur la pente.

7. Procédé selon l'une des revendications 5 et 6, **caractérisé en ce que** la distance parcourue par l'élément écartable (2) est ajustée en fonction de la température des freins et/ou du moteur du véhicule automobile.

8. Procédé selon la revendication 7, **caractérisé en ce que** le profil de température du frein est saisi après l'arrêt du véhicule automobile et **en ce que** le profil de température saisi est pris en compte lors du réglage de la distance que doit parcourir l'élément écartable (2).
